(19) Europäisches Patentamt
European Patent Office
Office européen des brevets

(11) **EP 2 925 828 B1**

(12) **FASCICULE DE BREVET EUROPEEN**

(45) Date de publication et mention
de la délivrance du brevet:
**06.11.2019 Bulletin 2019/45**

(21) Numéro de dépôt: **13808127.8**

(22) Date de dépôt: **28.11.2013**

(51) Int Cl.:
***C09K 3/32*** *(2006.01)*

(86) Numéro de dépôt international:
**PCT/FR2013/052894**

(87) Numéro de publication internationale:
**WO 2014/083288 (05.06.2014 Gazette 2014/23)**

(54) **COMPOSITION DE DÉPOLLUTION ET SON UTILISATION**

VERSCHMUTZUNGSENTFERNUNGSZUSAMMENSETZUNG UND VERWENDUNG DAVON

POLLUTION REMOVAL COMPOSITION AND USE THEREOF

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.11.2012 FR 1261358**

(43) Date de publication de la demande:
**07.10.2015 Bulletin 2015/41**

(73) Titulaire: **PREVOR INTERNATIONAL
75015 Paris (FR)**

(72) Inventeurs:
• **NEEL, Mathilde
95430 Butry (FR)**
• **MATHIEU, Laurence
33400 Talence (FR)**
• **BLOMET, Joël
95760 Valmondois (FR)**
• **MEYER, Marie-Claude
75015 Paris (FR)**

(74) Mandataire: **Plasseraud IP
66, rue de la Chaussée d'Antin
75440 Paris Cedex 09 (FR)**

(56) Documents cités:
WO-A1-00/66241      WO-A1-87/06758
GB-A- 2 293 388     US-A- 4 865 761
US-A- 5 342 543     US-A1- 2009 253 879

## Description

### Domaine de l'invention

La présente invention est relative à une composition de dépollution et son utilisation pour lutter contre les pollutions chimiques provoquées par des déversements intempestifs de liquides acides ou basiques.

De nos jours, nous sommes de plus en plus exposés aux pollutions chimiques, dans notre environnement, dans notre alimentation et au travail. En cas d'accident, ces polluants chimiques posent potentiellement des problèmes de pollution et de sécurité à différents échelles. Par exemple, un accident routier d'un camion transportant des matières premières toxiques ou dangereuses peut provoquer une pollution environnementale ou des dégâts sur la route. Dans l'industrie ou dans le laboratoire, une erreur de manipulation d'un bidon contenant une matière première toxique ou dangereuse peut provoquer des blessures des personnels ou l'endommagement des dispositifs et installations. Ainsi la maîtrise rapide des pollutions est primordiale dans de nombreuses situations.

Les liquides acides et basiques, qui sont des produits chimiques généralement corrosifs, plus ou moins agressifs, sont largement utilisés dans les laboratoires et dans différentes industries.

En cas d'accident, ces liquides peuvent provoquer notamment une corrosion des matériels et des brûlures de contact.

La dépollution des liquides acides et basiques peut être faite par leur neutralisation et leur absorption simultanément.

### L'art antérieur

De nombreuses compositions pour dépolluer des liquides acides et basiques existent. Ainsi, des compositions absorbantes comprenant des nanoparticules, par exemple Fast Act®, ont connu un développement important au cours de ces dernières années. Bien que ces compositions soient efficaces contre les pollutions chimiques liquides et gazeuses, elles provoquent des réactions fortement exothermiques, elles sont irritantes mais présentent également des risques de toxicité liés à la présence de nanoparticules.

Une composition comprenant l'acide citrique et un polymère absorbant (cellulose) a aussi été mise sur le marché, par exemple sous la marque Neutrabase. Cette composition est non seulement irritante, mais elle donne un résidu sous forme de gel collant, qui n'est pas facile à ramasser.

Une composition comprenant de l'acide citrique, de l'amidon, et de la silice a aussi été mise sur le marché, par exemple sous la marque Neutracit®. On peut également citer une composition comprenant du carbonate de calcium, du carbonate de sodium et de l'oxyde de magnésium (Neutrabsorb®), et une composition comprenant 50% de carbonate de potassium (Chemizorb H+®). Ces compositions sont irritantes et provoquent des réactions dont l'exothermie est importante.

Ainsi, à ce jour, il n'existe pas de composition de dépollution:

(1) qui soit non irritante et non toxique, c'est-à-dire qui ne nécessite aucun étiquetage spécifique,
(2) qui permette une neutralisation et une absorption des polluants acides ou basiques satisfaisantes,
(3) qui ne soit pas nocive ou dangereuse lors de son utilisation,
(4) qui forme avec le polluant un résidu facile à ramasser et ne laissant pas de trace, et
(5) qui permette un coût faible de dépollution et de ramassage des résidus obtenus.

En effet, ces cinq critères peuvent être contradictoires.

Or les présents inventeurs ont eu le mérite de trouver une composition de dépollution qui présente un excellent compromis entre ces différents critères (1)-(5) .

### La présente invention

Ainsi l'invention porte une composition de dépollution telle que définie à la revendication 1 comprenant :

(a) au moins un agent neutralisant,
(b) au moins un agent absorbant,
(c) au moins un mélange texturant qui est un mélange de gel de silice et d'un agent texturant amphotère dont les deux pKa ($pKa_1$ et $pKa_2$, $pKa_1$ étant inférieur à $pKa_2$) remplissent les conditions suivantes :

$$pKa_1 > 2,$$

$$pKa_2 < 12,$$

et

$$5 < (pKa_1 + pKa_2)/2 < 10.$$

A la connaissance des inventeurs, une telle composition n'a jamais été divulguée dans l'art antérieur.

Par « dépollution », on entend la neutralisation complète et l'absorption complète des polluants liquides acides ou basiques et leur rétention.

La composition de la présente invention:

(1) n'est pas irritante ni toxique, c'est-à-dire qu'elle ne nécessite aucun étiquetage spécifique,

(2) permet d'absorber et de neutraliser efficacement des liquides acides ou basiques,

(2) donne un résidu facile à ramasser et qui ne laisse pas de trace sur la surface duquel il est retiré,

(3) ne présente aucun effet nocif ou dangereux, lors de son utilisation, et

(4) permet une dépollution à un coût faible.

(1) La composition selon l'invention n'est pas irritante ni toxique, c'est-à-dire qu'elle ne nécessite pas d'étiquetage particulier ni de précaution particulière lors de sa fabrication et son stockage. La composition de dépollution de la présente invention ne contient aucun ingrédient pouvant présenter un caractère nocif supposé ou avéré, tel que des nanoparticules.

(2) L'efficacité de neutralisation et d'absorption est déterminée par la quantité de composition nécessaire pour neutraliser et absorber le liquide polluant.

Par « neutraliser », on entend amener le pH du mélange de polluant/composition de dépollution, à une valeur de 5 à 10, même de 6 à 8, et notamment 7.

Par « absorber », on entend amener à l'état solide le polluant se présentant initialement sous forme liquide en le mélangeant avec la composition de dépollution. Plus petite est la quantité nécessaire pour absorber et neutraliser le liquide polluant, plus efficace sera ladite composition.

(3) Le résidu obtenu après la dépollution du liquide acide ou basique par utilisation de la composition selon l'invention doit être facile à ramasser.

Par « facile à ramasser », on entend le fait que les caractéristiques du résidu obtenu sont telles qu'il n'y a pas de difficulté technique particulière lors de son ramassage, et que l'opération de ramassage peut être effectuée par des moyens couramment utilisés par un homme du métier. Ainsi, le résidu obtenu par utilisation de la composition selon l'invention n'est ni visqueux ni collant, mais se présente sous la forme d'un gel solide, qui peut facilement être retiré sans laisser de résidu collé au sol, par exemple à l'aide d'une pelle ou par aspiration, etc.

Le retrait du résidu est total, c'est-à-dire qu'il ne reste pas de trace ou de liquide sur la surface duquel il a été retiré. Cette absence de trace après retrait est un atout de sécurité supplémentaire. En effet, avec les produits commerciaux, des traces le plus souvent liquides subsistent après les opérations de dépollution ce qui rend les surfaces glissantes et donc susceptibles de provoquer des accidents.

(4) Lors de son utilisation la composition n'a pas d'effet nocif ou dangereux, elle peut être manipulée sans risque. Quand elle entre en contact avec des polluants acides ou basiques, elle ne conduit pas à une réaction trop exothermique, c'est-à-dire, à une réaction entrainant une élévation de température telle qu'elle endommagerait le milieu environnant. Par ailleurs, la réaction de neutralisation ne s'accompagne pas de dégagement de gaz toxique.

(5) Finalement, le coût total de la dépollution mettant en œuvre la composition selon l'invention est faible. Il est à noter que le coût total de dépollution consiste non seulement en le coût des matières premières et de fabrication de la composition, mais aussi en le coût des opérations de ramassage et de traitement des résidus (incinération notamment), d'où l'intérêt d'obtenir un résidu facile à ramasser et peu encombrant. Or de par sa grande capacité absorbante et son fort pouvoir neutralisant, la quantité massique de composition de dépollution utilisée pour lutter contre la pollution acide ou basique est faible. C'est une quantité minime et donc une masse minime de déchet formé, qui devra être stocké et/ou traité.

La composition de la présente invention se présente sous une forme solide pulvérulente, elle peut donc facilement être épandue autour ou sur le liquide polluant. Son utilisation est simple et rapide.

**(a) Agent neutralisant**

Par « agent neutralisant », on entend un composé capable de changer le pH de son milieu environnant en un pH de 5 à 10, voire de 5,5 à 9, même de 6 à 8, et notamment 7.

La capacité de neutralisation d'un composé (ou d'une composition), exprimée en g/mol, correspond à la quantité en masse dudit composé (ou de ladite composition) qu'il est nécessaire d'ajouter à 1 mole d'acide fort ou de base forte pour que le pH résultant soit de 5 à 10, de préférence de 5,5 à 9, et plus préférentiellement de 6 à 8.

Les agents neutralisants pour des liquides acides, sont des bases dont un pKa est de 7 à 13, de préférence de 8 à 12, plus préférentiellement de 9 à 10.

Les agents neutralisants pour des liquides basiques, sont les acides dont un pKa est de 2 à 7, et de préférence de 3 à 6, plus préférentiellement de 4 à 5.

Selon la présente invention, ledit agent neutralisant est choisi parmi le carbonate de calcium, le carbonate de magnésium, l'oxyde de magnésium, le citrate de sodium monobasique, l'acide succinique, et leurs mélanges. On préfère utiliser le carbonate de calcium, le citrate de sodium monobasique et leurs mélanges.

En cas de dépollution de liquides acides, on peut utiliser notamment le carbonate de calcium, le carbonate de magnésium, l'oxyde de magnésium, les sels d'acides aminés et leurs mélanges. On préfère utiliser le carbonate de calcium.

En effet, le carbonate de calcium est préféré car il a un pouvoir neutralisant élevé de 20 mol/kg, il n'est pas irritant et n'est pas cher.

Le carbonate de magnésium peut être utilisé mais il présente un pouvoir neutralisant moins satisfaisant que le carbonate de calcium car la cinétique de réaction est plus lente et le produit résultant a une texture qui le rend difficile à ramasser.

L'oxyde de magnésium est irritant, et les sels d'acides aminés sont plus chers que le carbonate de calcium, c'est pourquoi, ils peuvent être utilisés mais ne sont pas préférés.

En cas de dépollution de liquides basiques, on peut utiliser notamment le citrate de sodium monobasique, l'acide succinique, et leurs mélanges. Le citrate de sodium monobasique est préféré.

**(b) Agent absorbant**

Par « agent absorbant », on entend des composés solides qui ont la capacité d'absorber des liquides.

Selon un mode de réalisation particulier de la présente invention, l'agent absorbant présente une capacité d'absorption de 1L à 1000L pour 1kg dudit agent absorbant, de préférence de 1L à 500L pour 1kg dudit agent absorbant.

La capacité d'absorption d'un composé (ou d'une composition) est exprimée en kg/L et correspond à la quantité en masse dudit composé (ou de ladite composition) qu'il est nécessaire d'ajouter pour que le mélange avec 1L de liquide déterminé devienne solide.

On peut donc la mesurer de la façon suivante :

1) 1L de liquide déterminé est mis dans un récipient;
2) Une quantité déterminée de la composition de la présente invention est ajoutée dans ledit récipient;
3) Une fois le mélange homogénéisé, l'état (liquide ou solide) du mélange est vérifié : les étapes 1) et 2) sont répétées jusqu'à l'obtention d'un résidu solide;
4) La quantité en Kg de composition de dépollution ajoutée correspond à la capacité d'absorption en le liquide déterminé de ladite composition en Kg/L.

Dans la description, sauf indication contraire, les valeurs d'absorption sont données pour l'eau.

L'agent absorbant de la présente invention peut être un agent absorbant inorganique ou un agent de synthèse. L'agent absorbant inorganique est un agent présentant une faible granulométrie (de l'ordre de 80 pm à 200 $\mu$m) et une porosité importante telle que le volume de vide par rapport au volume des granules est de l'ordre de 50 à 80%.

L'agent absorbant de synthèse est un polymère ou un copolymère qui présente un taux de gonflement pouvant aller jusqu'à 500, le taux de gonflement étant le rapport entre le volume de l'agent absorbant après mise en contact avec le liquide et absorption et le volume initial de l'agent absorbant avant sa mise au contact avec le liquide.

L'agent absorbant peut être un agent absorbant aqueux, c'est-à-dire un agent qui absorbe essentiellement les liquides aqueux, ou un agent capable d'absorber tous types de liquides.

L'agent absorbant aqueux peut être, entre autres, un polymère ou copolymère de type super absorbant (polyacrylate de sodium, polyacrylate de potassium, polyamide, ou copolymère à blocs de polyacrylate de sodium, polyacrylate de potassium, polyamide), et leurs mélanges

Le copolymère de type polyacrylate /polyamide peut être un copolymère polyacrylate de sodium/polyamide, par exemple ceux commercialisés sous les marques Aquakeep®, Luquasorb®, Tramfloc®, Biosap®, Aquasorb®, et Wastelock®.

Ce type de copolymère a une bonne capacité d'absorption des liquides aqueux, c'est-à-dire qu'il peut absorber jusqu'à plusieurs centaines de fois son poids d'eau, mais coûte cher. En particulier, le copolymère commercialisé sous la marque Aquakeep® est capable d'absorber et de retenir, dans certaines situations, de l'eau en une quantité correspondant jusqu'à 400 fois son poids sec.

Selon la présente invention, ledit agent absorbant est un polymère ou copolymère de type polyacrylate.

Ces composés ne sont pas irritants et ne dégagent pas de gaz nocif lors de leur utilisation.

**(c) Mélange texturant**

Par « mélange texturant », on entend des composés capables de changer la texture d'une composition.

Le mélange texturant de la présente invention est un mélange de gel de silice et d'un agent texturant amphotère dont les deux pKa ($pKa_1$ et $pKa_2$, $pKa_1$ étant inférieur à $pKa_2$) remplissent les conditions suivantes :

$$pKa_1 > 2,$$

$$pKa_2 < 12,$$

et

$$5 < (pKa_1 + pKa_2)/2 < 10.$$

De tels agents texturants sont des composés solides. Selon la présente invention, les agents texturants sont choisis parmi le bicarbonate de sodium, le bicarbonate de potassium, le citrate disodique, les acides aminés et leurs sels, tels que la glycine, l'acide glutamique, le glutamate de sodium, et leurs mélanges. De préférence, l'agent texturant est le bicarbonate de sodium.

Ces composés ne sont pas irritants et ne dégagent pas de gaz nocif lors de l'utilisation de la composition. Notamment, le bicarbonate de sodium fonctionne comme un excellent agent texturant pour les liquides acides ou basiques.

Le mélange texturant comprend un gel de silice, notamment de la silice poreuse dont la granulométrie est comprise entre 80 pm et 200 $\mu$m.

Un tel gel de silice est commercialisé par exemple sous les marques Tixosil 68®, Upasil 60®.

Le gel de silice présent dans la composition comme agent texturant a également une certaine capacité d'absorption des liquides.

Tixosil 68® absorbe environ 3 fois son poids de liquides et est relativement peu coûteux. Il permet de terminer l'absorption et d'améliorer la texture du résidu qui sera facile à ramasser et ne laissera pas de traces résiduelles.

Dans le mélange texturant mis en œuvre dans la composition selon l'invention, la quantité de gel de silice est de 1 à 90%, plus particulièrement 20 à 80% et plus préférentiellement encore 30 à 70% en poids par rapport au poids du mélange texturant, la quantité restante étant l'agent texturant amphotère.

Le mélange texturant mis en œuvre dans la composition selon l'invention permet d'améliorer la texture de la composition et celle du résidu formé après son utilisation. Le résidu formé présente une texture qui en facilite le ramassage sans laisser de traces.

**(d) Additifs**

En outre, la composition selon la présente invention peut éventuellement contenir au moins un additif choisi parmi les agents indicateurs de pH, les colorants, les parfums, les agents d'écoulement, et leurs mélanges. L'homme du métier est en mesure de choisir, parmi l'ensemble de ces additifs éventuels, aussi bien la composition que la quantité de ceux qui seront ajoutés à la composition, de telle sorte que celle-ci conserve l'ensemble de ses propriétés.

**Agent indicateur de pH**

Par « agent indicateur de pH », on entend un composé qui a la capacité de changer de couleur en fonction du pH de son milieu environnant.

Des exemples d'agents indicateurs de pH sont le bleu de thymol, la tropaeoline, le pourpre de bromocrésol, le bleu de bromophénol, le rouge de congo, le rouge neutre, la phénolphtaléine, le thymolphtaléine, le jaune d'alizarine R, le bleu de bromothymol, le rouge de crésol, le méthyle violet, le vert malachite, le jaune de méthyle, le rouge congo, le méthyle orange, le vert de bromocrésol, le rouge de méthyle, le rouge de phénol, l'alizarine, le carmin d'indigo et leurs mélanges.

Ainsi, selon un mode de réalisation particulier de la présente invention, la composition comprend en outre au moins un agent indicateur de pH choisi parmi le tropaeoline, le bleu de thymol, le pourpre de bromocrésol, le bleu de bromophénol, le rouge de congo, le rouge neutre, la phénolphtaléine, le thymolphtaléine, le jaune d'alizarine R, et leurs mélanges.

La présence d'un agent indicateur de pH permet de visualiser la neutralisation complète de l'acide ou de la base à dépolluer, en utilisant la juste quantité de composition nécessaire, et ainsi de baisser le coût de dépollution.

## Colorants

A titre d'exemple de colorant, on peut citer tout colorant dépourvu de toxicité, par exemple de qualité alimentaire. En particulier, on peut citer le bleu patenté V, la Carmoisine, la tartrazine, etc.

## Parfum

Les parfums peuvent être d'origine naturelle : Huiles essentielles de fleurs, de fruits, écorce de bois (cannelle, santal), de la résine (encens, myrrhe) ou ils peuvent être d'origine synthétique (vanilline par exemple).

## Agents d'écoulement

Afin de faciliter l'épandage de la composition selon l'invention, celle-ci peut inclure des agents d'écoulement. A titre d'exemples de tels agents, on peut citer du sable, de la tourbe, etc.

Selon un mode de réalisation particulier de la présente invention, ledit agent neutralisant est présent en une quantité allant de 5% à 70%, de préférence de 10% à 65%, et encore plus préférentiellement de 15% à 60% en poids par rapport au poids total de la composition.

Selon la présente invention, ledit agent absorbant est présent en une quantité allant de 1% à 20%, de préférence de 3% à 15% et encore plus préférentiellement de 5% à 10% en poids par rapport au poids total de la composition.

Selon la présente invention, le mélange texturant est présent en une quantité allant de 5% à 90%, de préférence de 10% à 80%, et encore plus préférentiellement de 20 à 70% en poids par rapport au poids total de la composition.

Selon un mode particulier de la présente invention, ledit agent indicateur de pH est présent en une quantité allant de 0,001% à 0,1%, de préférence de 0,005% à 0,08%, et encore plus préférentiellement de 0,01% à 0,05% en poids par rapport au poids total de la composition.

Selon un mode particulier de la présente invention, la composition de la présente invention comprend :

(a) de 5% à 70%, de préférence de 10% à 65%, et encore plus préférentiellement de 15% à 60% d'au moins un agent neutralisant,

(b) de 1% à 20%, de préférence de 3% à 15%, et encore plus préférentiellement de 5% à 10% d'au moins un agent absorbant, et

(c) de 5% à 90%, de préférence de 10% à 80%, et encore plus préférentiellement de 20% à 70% d'au moins un mélange texturant qui est un mélange de gel de silice et d'au moins un agent texturant amphotère choisi parmi le bicarbonate de sodium, le bicarbonate de potassium, le citrate disodique, les acides aminés tels que la glycine, et leurs mélanges,

(d) de 0% à 0,1%, de préférence de 0,005% à 0,08%, et encore plus préférentiellement de 0,01% à 0,05% d'au moins un agent indicateur de pH,

ledit agent texturant amphotère ayant deux pKa ($pKa_1$ et $pKa_2$, $pKa_1$ étant inférieur à $pKa_2$) remplissant les conditions suivantes :

$$pKa_1 > 2,$$

$$pKa_2 < 12,$$

et

$$5 < (pKa_1 + pKa_2)/2 < 10,$$

lesdits pourcentages étant des pourcentages en poids par rapport au poids total de la composition.

Selon un mode particulier de la présente invention, la composition de la présente invention comprend :

(a) de 5% à 70%, de préférence de 10% à 65%, et encore plus préférentiellement de 15% à 60% d'au moins un agent neutralisant, choisi parmi le carbonate de calcium ou le citrate de sodium monobasique,
(b) de 1% à 20%, de préférence de 3% à 15%, et encore plus préférentiellement de 5% à 10% de copolymère de type polyacrylate/polyamide et
(c) de 5% à 90%, de préférence de 10% à 80%, et encore plus préférentiellement de 20 à 70% de mélange texturant qui est un mélange de gel de silice et de bicarbonate de sodium,
(d) de 0% à 0,1%, de préférence de 0,01% à 0,08%, et encore plus préférentiellement de 0,02% à 0,05% d'au moins un agent indicateur de pH,

lesdits pourcentages étant des pourcentages en poids par rapport au poids de la composition.

La combinaison très spécifique de ladite composition permet d'optimiser la dépollution, par formation d'un résidu aussi peu encombrant que possible et facile à ramasser sans laisser de traces. Le résidu est également facile à traiter et sans aucun effet corrosif, et ainsi de baisser le coût de dépollution.

Selon un mode de réalisation particulier de la présente invention, la composition présente une capacité d'absorption de 0,5L à 10L pour 1Kg de ladite composition, de préférence de 0,5 à 5 L pour 1Kg de ladite composition, et plus préférentiellement encore de 1 à 3L pour 1Kg de ladite composition.

## Utilisation

L'invention porte également sur un procédé de dépollution mettant en œuvre la composition selon l'invention.

Le procédé selon l'invention comprend les étapes suivantes :

1) ajouter la composition décrite précédemment sur le liquide ;
2) attendre jusqu'à l'absorption du liquide polluant par la composition;
3) vérifier le pH ;
4) répéter les étapes 1) à 3) jusqu'à la neutralisation et l'absorption complètes du liquide ; et
5) ramasser le résidu.

L'étape 1) peut être effectuée de différentes manières en fonction de l'importance de la pollution. Par exemple, s'il s'agit d'une pollution de l'échelle laboratoire, l'étape 1) peut être effectuée en versant manuellement la composition selon l'invention, autour ou sur le liquide polluant, et quand il s'agit d'une pollution d'une échelle plus importante (tel que renversement de camion transportant une matière première), l'étape 1) peut être effectuée par un versement à l'aide par exemple d'un camion-benne ou d'une lance de pompier, autour ou sur le liquide polluant.

Si le liquide polluant est neutralisé avant son absorption complète, les étapes 1) et 2) sont répétées jusqu'à l'absorption complète.

De la même façon, si le liquide polluant est absorbé, c'est-à-dire transformé en résidu solide avant neutralisation, une étape supplémentaire de dilution à l'eau du mélange comprenant le liquide polluant et la composition est ajoutée après l'étape 3), et les étapes 1) à 3) sont répétés jusqu'à neutralisation complète.

Dans ce cas, la composition selon l'invention sera ajoutée sur le résidu dilué jusqu'à neutralisation et absorption complètes.

L'étape de dilution est nécessaire pour les acides ayant une concentration supérieure à 15mol.L$^{-1}$ pour parvenir à une neutralisation complète.

Si la composition de l'invention comprend un indicateur de pH, la vérification de pH de l'étape 3) peut être faite visuellement grâce aux indicateurs colorés, et il n'est plus nécessaire de mesurer le pH par une autre méthode telle que pH-métrie ou l'utilisation d'un papier pH.

Une fois qu'un résidu neutre et solide est obtenu, le résidu est ramassé avec des moyens couramment utilisés par l'homme du métier, par exemple à l'aide d'une pelle ou par aspiration.

La composition permet à la fois d'absorber et de neutraliser les liquides acides ou basiques avec une utilisation de quantité minimum de produit et à un coût inférieur par rapport aux produits de l'état de la technique.

De plus, la composition de la présente invention n'est pas dangereuse (non toxique, non irritante, non allergisante, et non écotoxique), contrairement aux produits de l'état de la technique. Elle ne contient pas non plus de nanoparticules, qui posent potentiellement des risques pour la santé.

Lors de l'utilisation, la composition de la présente invention ne provoque pas une élévation de température dommageable au milieu environnant, ou même si une élévation de température est observée, elle est bien moindre que celle obtenue avec les produits actuellement commercialisés.

Par ailleurs, le ramassage du résidu formé est facile et du fait de la quantité minimale de produit mise en œuvre, son stockage et/ou traitement ultérieur, peut se faire à coût très raisonnable.

L'invention sera maintenant illustrée par les exemples non limitatifs suivants.

## EXEMPLES

Dans les exemples, les produits commerciaux suivants sont utilisés

Neutracide®, commercialisé par Haléco, comprend 28% de cellulose de bois expansé (CAS 65996-61-4), 65% de carbonate de sodium (CAS 497-19-8), moins de 0,1% d'indicateur coloré (CAS 845-10-3), 2% de polymère absorbant (CAS 009033-79-8), et 5% de phosphate de sodium (CAS 7758-80-7).

L'absorbant Trivorex®, est commercialisé par PREVOR. Il est désigné TXC sur les figures.

La sépiolite est du minéral desséché.

Neutrabase®, commercialisé par Haléco, comprend 28% de cellulose de bois expansé (CAS 65996-61-4), moins de 0,1% d'indicateur coloré (CAS 125-20-2), 2% de polymère absorbant (CAS 009033-79-8), 70% de phosphate de sodium (CAS 7558-80-7).

### Exemple 1 : Test de formulation

Afin d'optimiser la composition de la présente invention, les capacités d'absorption et de neutralisation ont été comparées pour différentes formulations.

Les résultats sont présentés dans le tableau suivant.

Les quantités d'ingrédients mentionnées ci-après sont indiquées en pourcentage pondéral.

| | Composition | | Masse pour absorber 5mL de HCL à 37% | Masse pour absorber 5mL de $H_2SO_4$ à 98% |
|---|---|---|---|---|
| 1 | $CaCO_3$<br>$NaHCO_3$<br>Aquakeep® | 30%<br>46%<br>24% | 7, 6 g (pH=6, 5) | - |
| 2 | $CaCO_3$<br>$NaHCO_3$<br>Aquakeep® | 20%<br>56%<br>24% | 6 g (pH=5) | 4g (absorption) 14g+10mL $H_2O$ (neutralisation) |
| 3 | $CaCO_3$<br>$NaHCO_3$<br>Aquakeep® | 10%<br>66%<br>24% | 5,4 g (pH=5) | 3g (absorption) 17g+15mL $H_2O$ (neutralisation) |
| 4 | $CaCO_3$<br>Aquakeep® | 76%<br>24% | 5 g (pH=5) | 2g (absorption) 30g+40mL $H_2O$ (neutralisation) |

Toutes les formulations testées donnent des résultats tout à fait satisfaisants, supérieurs à ceux qui seraient obtenus avec les produits actuellement commercialisés.

Notamment la formulation 2 présente le meilleur effet absorbant et neutralisant.

### Exemple 2 : Absorbant Spécial acide

Une composition de dépollution, désignée par X088-1, a été préparée en mélangeant les ingrédients suivants.

| | |
|---|---|
| Aquakeep SH-F® | 8 % |
| Tixosil 68® | 16 % |
| Bicarbonate de sodium | 56 % |
| Carbonate de calcium | 20 % |

Les quantités d'ingrédients mentionnées sont indiquées en pourcentage pondéral.

A ce mélange, on ajoute 0,01 % de Tropaeoline et 0,02% de Bleu de thymol, par rapport à la quantité dudit mélange préparé précédemment.

## Exemple 3 : différents agents texturants

Afin de comparer l'efficacité de différents agents texturants, dans la formulation de l'Exemple 2, le bicarbonate de sodium ($NaHCO_3$) a été remplacé par les agents texturants suivants : le bicarbonate de potassium ($KHCO_3$), la glycine et le glutamate de sodium,.

Les acides suivants ont été utilisés : 5mL de HCl 37%, $HNO_3$ 65%, $H_2SO_4$ 98% absolu, $H_2SO_4$ 98%, HCl 5N.

Les résultats d'absorption et de neutralisation sont présentés dans le tableau suivant. Le pH d'une solution de 1g de produit dans 100 mL d'eau est aussi mesuré et les mesures sont reportées dans le tableau suivant.

|  | Ex. 2 | $KHCO_3$ | Glycine | Glutamate de sodium |
|---|---|---|---|---|
| HCl 37% | 5.8g pH>5 | 7.4 g pH>5 | 14.2 g pH=2.38 | 8g pH<1 |
| $HNO_3$ 65% | 4.6g pH=5 | 7 pH=3.5 | 10.1g pH=2.45 | 9g pH<1 |
| $H_2SO_4$ 98% abs | 3g | 8.3 | 12.4g | 7g |
| $H_2SO_4$ 98% neut | 10 mL 22g | 10mL 20.6 g | 20mL 24.4 | 20mL 19g |
| HCl 5N |  | 7.5g | 22g | 11g |
| pH 1g/100 mL $H_2O$ | 7.4 | 8.20 | 7.9 | 8.1 |

Toutes les formulations testées donnent des résultats tout à fait satisfaisants, permettant d'obtenir une capacité de dépollution moins onéreuse et toute aussi efficace que les produits actuellement commercialisés. Notamment le bicarbonate de sodium donne les résultats les plus favorables.

## Exemple 4: Absorbant Spécial acide

Le test d'absorption a été effectué successivement avec les acides suivants : HCl 37%, $H_2SO_4$ 98%, $H_2SO_4$ 60%, $HNO_3$ 100%, $HNO_3$ 65%, et AcOH, en utilisant d'une part la composition préparée selon l'exemple 2, et d'autre part, à des fins de comparaison, Neutracide®, l'absorbant Trivorex® et la sépiolite. Le protocole suivant a été utilisé :

1) 1L de liquide acide est mis dans un récipient en verre;
2) On recouvre le liquide acide avec une quantité déterminée de la composition préparée dans l'exemple 2, ou avec l'une des compositions de comparaison mentionnées ci-dessus.
Une fois le mélange homogénéisé à l'aide d'une spatule, l'état (liquide ou solide) du mélange est vérifié;
3) L'étape 2) est répétée jusqu'à l'obtention d'un résidu solide;
4) Une fois qu'un résidu solide est obtenu, ledit résidu est ramassé à la pelle.

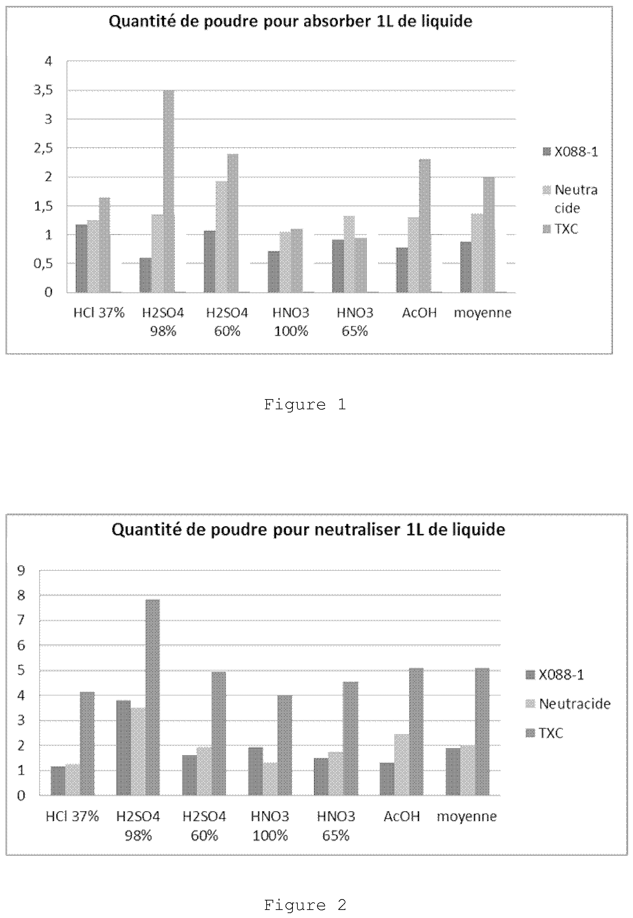

Les résultats du test d'absorption sont présentés sur la Figure 1.

Au vu de ces résultats, on peut noter que, quelques soient les acides et leurs concentrations, la composition de la présente invention (X088-1) a montré une meilleure efficacité d'absorption que les produits actuellement commercialisés.

Par ailleurs, le coût de traitement à l'aide de la composition selon l'invention est abaissé d'au moins 20%, voire d'au moins 50% par rapport au coût de traitement à l'aide des compositions actuellement commercialisées.

### Test de neutralisation de liquide polluant acide

Le test de neutralisation a été effectué successivement avec les acides suivants : HCl 37%, $H_2SO_4$ 98%, $H_2SO_4$ 60%, $HNO_3$ 100%, $HNO_3$ 65%, et AcOH, en utilisant d'une part la composition préparée à l'exemple 2 et d'autre part, à des fins de comparaison, Neutracide®, l'absorbant Trivorex® et sépiolite, selon le protocole suivant :

1) 1L de liquide acide est mis dans un récipient en verre;

2) On recouvre le liquide acide avec une quantité déterminée de la composition préparée à l'exemple 2, ou avec l'une des compositions de comparaison mentionnées ci-dessus.

3) Une fois le mélange homogénéisé avec une spatule, la couleur du mélange est vérifiée, pour déterminer le pH du mélange;

4) On ajoute 100 mL d'eau et les étapes 2) et 3) sont répétées jusqu'à l'obtention d'un résidu de pH supérieur à 5.

Les résultats du test de neutralisation de liquide sont présentés sur la Figure 2.

Au vu des résultats, on peut noter que quelques soient les acides et leurs concentrations, la composition de la présente invention a montré une efficacité de neutralisation meilleure que les produits actuellement commercialisés.

Par ailleurs, le coût de traitement à l'aide de la composition selon l'invention est abaissé d'environ 20%, par rapport au coût de traitement à l'aide des compositions actuellement commercialisées.

En conclusion, la composition permet à la fois d'absorber et de neutraliser différents acides de différentes concentrations en utilisant une quantité minimum du produit et à un coût inférieur à celui des produits actuellement commercialisés.

En plus, la composition n'est pas dangereuse (non toxique, non irritante, non allergisante, et non écotoxique), contrairement à certains produits actuellement commercialisés.

### Exemple 5 : Absorbant Spécial base

### 5-1. Formulation

Une composition de dépollution, désignée par Y077-1, a été préparée en mélangeant les ingrédients suivants.

| | |
|---|---|
| Aquakeep SH-F® | 6,25 % |
| Tixosil 68® | 18,75 % |
| Bicarbonate de sodium | 18,75 % |
| Citrate de sodium monobasique | 56,25 % |

Les quantités d'ingrédients mentionnées sont indiquées en pourcentage pondéral.

A ce mélange, on ajoute 0,01 % de Tropaeoline et 0,02% de Bleu de thymol, par rapport à la quantité dudit mélange préparé précédemment.

### 5-2. Test de neutralisation de liquide polluant basique

Le test de neutralisation a été effectué successivement avec les bases suivantes : NaOH 1N, NaOH 5N, NaOH 50%, NaOH 50% (neutralisation), ammoniaque 32% triéthylamine, et éthanolate de sodium 20% dans l'éthanol en utilisant d'une part la composition préparée en 5-1 et d'autre part à des fins de comparaison Neutrabase®, selon le protocole suivant :

1) 1L de liquide basique est mis dans un récipient en verre;

2) On recouvre le liquide basique avec une quantité déterminée composition préparée en 5-1, ou de la composition de comparaison mentionnée ci-dessus.

3) Une fois le mélange homogénéisé avec une spatule, la couleur du mélange est vérifiée, pour déterminer le pH du mélange;

4) On ajoute 100 mL d'eau et les étapes 2) à 3) sont répétées jusqu'à l'obtention d'un résidu de pH inférieur à 10.

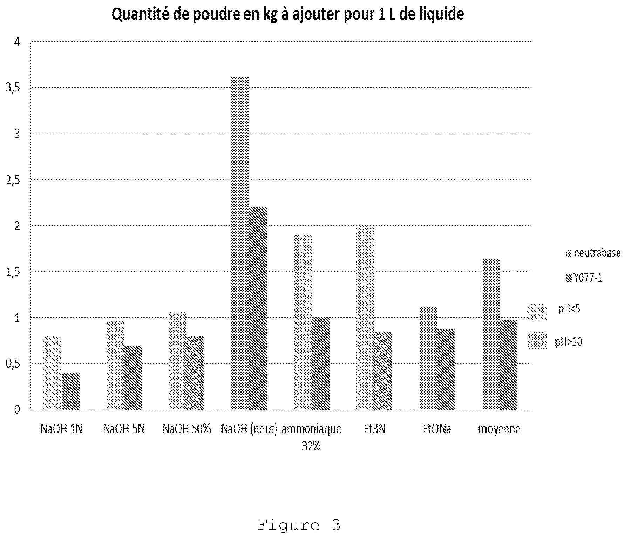

Les résultats du test d'absorption/neutralisation de liquides basiques sont présentés sur la Figure 3.

Au vu des résultats, on peut noter que quelques soient les bases et leurs concentrations, la composition de la présente invention (Y077-1) a montré une efficacité d'absorption et de neutralisation meilleure que les produits actuellement commercialisés.

Par ailleurs, le coût de traitement à l'aide de la composition selon l'invention est abaissé d'au moins 20% voire 50% par rapport au coût de traitement à l'aide des compositions actuellement commercialisés.

En conclusion, la composition permet à la fois d'absorber et de neutraliser différents bases de différentes concentrations en utilisant une quantité minimum de produit et à un coût inférieur à celui des produits actuellement commercialisés.

En plus, la composition n'est pas dangereuse (non toxique, non irritante, non allergisante, et non écotoxique), contrairement à certains produits actuellement commercialisés.

**Revendications**

1. Composition de dépollution comprenant :

   (a) au moins un agent neutralisant
   (b) au moins un agent absorbant ;
   et
   (c) au moins un mélange texturant qui est un mélange de gel de silice et d'un agent texturant amphotère dont les deux pKa ($pKa_1$ et $pKa_2$, $pKa_1$ étant inférieur à $pKa_2$) remplissent les conditions suivantes :

   $$pKa_1 > 2,$$

   $$pKa_2 < 12,$$

   et

   $$5 < (pKa_1 + pKa_2)/2 < 10 \ ;$$

   ledit agent neutralisant étant choisi parmi le carbonate de calcium, le carbonate de magnésium, l'oxyde de magnésium, le citrate de sodium monobasique, l'acide succinique et leurs mélanges, et de préférence le carbonate de calcium, le citrate de sodium monobasique et leurs mélanges,
   ledit agent absorbant étant choisi parmi les polymères et copolymères de type polyacrylate de sodium,
   ledit agent absorbant étant présent en une quantité allant de 1% à 20% en poids par rapport au poids total de la composition,
   ledit agent texturant amphotère étant choisi dans le groupe comprenant le bicarbonate de sodium, le bicarbonate de potassium, le citrate disodique, et les acides aminés et leurs sels, tels que la glycine, l'acide glutamique, le glutamate de sodium, et leurs mélanges,
   le mélange texturant étant présent en une quantité allant de 5% à 90% en poids par rapport au poids total de la composition,
   ledit gel de silice étant présent en une quantité allant de 1% à 90% en poids par rapport au poids du mélange texturant, la quantité restante étant l'agent texturant amphotère.

2. Composition selon la revendication 1, **caractérisée en ce que** ladite composition présente une capacité d'absorption de 0,5L à 10L pour 1 Kg de ladite composition, de préférence de 0,5 à 5 L pour 1 Kg, et plus préférentiellement encore de 1L à 3L pour 1 Kg de ladite composition.

3. Composition selon la revendication 1 ou 2, **caractérisée en ce que** ledit agent absorbant présente une capacité d'absorption de 1L à 1000L pour 1 Kg dudit agent absorbant, et de préférence de 1L à 500L pour 1Kg dudit agent absorbant.

4. Composition selon l'une quelconque des revendications précédentes, **caractérisée en ce qu'**elle comprend en outre au moins un agent indicateur de pH choisi parmi le tropaeoline, le bleu de thymol, le pourpre de bromocrésol, le bleu de bromophénol, le rouge de congo, le rouge neutre, la phénolphtaléine, le thymolphtaléine, le jaune d'alizarine R, et leurs mélanges.

5. Composition selon l'une quelconque des revendications précédentes, **caractérisée en ce que** ledit agent neutralisant est présent en une quantité allant de 5% à 70%, de préférence de 10% à 65%, et encore plus préférentiellement de 15% à 60% en poids par rapport au poids total de la composition.

6. Composition selon l'une quelconque des revendications précédentes, **caractérisée en ce que** la composition comprend :

(a) de 5% à 70%, de préférence de 10% à 65%, et encore plus préférentiellement de 15% à 60% d'au moins un agent neutralisant, choisi parmi le carbonate de calcium ou le citrate de sodium monobasique,

(b) de 1% à 20%, de préférence de 3% à 15%, et encore plus préférentiellement de 5% à 10% d'un copolymère de type polyacrylate, et

(c) de 5% à 90%, de préférence de 10% à 80%, et encore plus préférentiellement de 20% à 70% d'un mélange texturant qui est un mélange de gel de silice et de bicarbonate de sodium,

(d) de 0% à 0,1%, de préférence de 0% à 0,08%, et encore plus préférentiellement de 0% à 0,05% d'au moins un agent indicateur de pH,

lesdits pourcentages étant des pourcentages en poids par rapport au poids total de la composition.

**Patentansprüche**

1. Dekontaminierungszusammensetzung, umfassend :

(a) wenigstens ein Neutralisationsmittel,
(b) wenigstens ein Absorptionsmittel
und
(c) wenigstens eine Texturiermischung, die eine Mischung aus Kieselgel und einem amphoteren Texturierungsmittel ist, von denen beide pKa-Werte ($pKa_1$ und $pKa_2$, wobei $pKa_1$ kleiner als $pKa_2$ ist) die folgenden Bedingungen erfüllen:

$$pKa_1 > 2,$$

$$pKa_2 < 12,$$

und

$$5 < (pKa_1 + pKa_2)/2 < 10 ;$$

wobei das Neutralisationsmittel gewählt ist aus Calciumcarbonat, Magnesiumcarbonat, Magnesiumoxid, einbasigem Natriumcitrat, Bernsteinsäure und Mischungen davon, und bevorzugt Calciumcarbonat, einbasiges Natriumcitrat und Mischungen davon, wobei das Absorptionsmittel gewählt ist aus Polymeren und Copolymeren vom Typ Natriumpolyacrylat, wobei das Absorptionsmittel in einer Menge von 1 bis 20 Gew.-%, bezogen auf das Gesamtgewicht der Zusammensetzung, vorhanden ist,

wobei das amphotere Texturiermittel gewählt ist aus der Gruppe, umfassend Natriumbikarbonat, Kaliumbikarbonat, Dinatriumcitrat und Aminosäuren und deren Salzen, wie Glycin, Glutaminsäure, Natriumglutamat und deren Mischungen,

wobei die Texturiermischung in einer Menge im Bereich von 5 bis 90 Gew.-%, bezogen auf das Gesamtgewicht der Zusammensetzung, vorhanden ist,

wobei das Kieselgel in einer Menge im Bereich von 1 bis 90 Gew.-%, bezogen auf das Gewicht der Texturiermischung, vorhanden ist und die verbleibende Menge das amphotere Texturiermittel ist.

2. Zusammensetzung nach Anspruch 1, **dadurch gekennzeichnet, dass** die Zusammensetzung eine Absorptionskapazität von 0,5 l bis 10 l pro 1 kg der Zusammensetzung, bevorzugt 0,5 bis 1 l pro 1 kg, und insbesondere 1 l bis 3 l pro 1 kg der Zusammensetzung aufweist.

3. Zusammensetzung nach Anspruch 1 oder 2, **dadurch gekennzeichnet, dass** das Absorptionsmittel eine Absorptionskapazität von 1 l bis 1000 l pro 1 kg des Absorptionsmittels und bevorzugt 1 l bis 500 l pro 1 kg des Absorptionsmittels aufweist.

4. Zusammensetzung nach einem der vorhergehenden Ansprüche, **dadurch gekennzeichnet, dass** sie ferner wenigstens ein pH-Indikator-Mittel umfasst, gewählt aus Tropaeolin, Thymolblau, Bromkresolviolett, Bromphenolblau, Kongorot, Neutralrot, Phenolphthalein, Thymolphthalein, Alizaringelb R und deren Mischungen.

**5.** Zusammensetzung nach einem der vorhergehenden Ansprüche, **dadurch gekennzeichnet, dass** das Neutralisationsmittel in einer Menge im Bereich von 5 % bis 70 %, bevorzugt 10 % bis 65 %, und noch stärker bevorzugt 15 % bis 60 %, bezogen auf das Gesamtgewicht der Zusammensetzung, vorhanden ist.

**6.** Zusammensetzung nach einem der vorhergehenden Ansprüche, **dadurch gekennzeichnet, dass** die Zusammensetzung umfasst:

(a) 5 % bis 70 %, bevorzugt 10 % bis 65 %, und noch stärker bevorzugt 15 % bis 60 % wenigstens eines Neutralisationsmittels, gewählt aus Calciumcarbonat oder einbasischem Natriumcitrat,

(b) 1 % bis 20 %, bevorzugt 3 % bis 15 %, und noch stärker bevorzugt 5 % bis 10 % eines Copolymers vom Polyacrylattyp, und

(c) 5 % bis 90 %, bevorzugt 10 % bis 80 %, und noch stärker bevorzugt 20 % bis 70 % einer Texturiermischung, die eine Mischung aus Kieselgel und Bikarbonat ist,

(d) 0 % bis 0,1 %, bevorzugt 0 % bis 0,08 % und noch stärker bevorzugt 0 % bis 0,05 % wenigstens eines pH-Indikators,

wobei die Prozentsätze Gewichtsprozente bezogen auf das Gesamtgewicht der Zusammensetzung sind.

## Claims

**1.** Pollution removal composition including:

(a) at least one neutralizing agent,
(b) at least one absorbent agent,
and
(c) at least one texturing mixture which is a mixture of silica gel and of an amphoteric texturing agent whose two pKa ($pKa_1$ and $pKa_2$, $pKa_1$ being less than $pKa_2$) meet the following conditions:

$$pKa_1 > 2,$$

$$pKa_2 < 12,$$

and

$$5 < (pKa_1 + pKa_2)/2 < 10,$$

said neutralizing agent being selected from calcium carbonate, magnesium carbonate, magnesium oxide, monobasic sodium citrate, succinic acid and their mixtures, and preferably from calcium carbonate, monobasic sodium citrate and their mixtures,
said absorbent agent being selected from polymers and copolymers of the sodium polyacrylate type,
said absorbent agent being present in a quantity ranging from 1% to 20% by weight with respect to the total weight of the composition,
said amphoteric texturing agent being selected from the group comprising sodium bicarbonate, potassium bicarbonate, disodium citrate, and the amino acids and their salts, such as glycine, glutamic acid, sodium glutamate, and their mixtures,
the texturing mixture being present in a quantity ranging from 5% to 90% by weight with respect to the total weight of the composition,
said silica gel being present in an amount ranging from 1 to 90% by weight with respect to the weight of the texturing mixture, the remaining quantity being the amphoteric texturing agent.

**2.** Composition according to Claim 1, **characterized in that** said composition has an absorption capacity from 0.5 L to 10 L per 1 kg of said composition, preferably from 0.5 to 5 L per 1 kg, and even more preferably from 1 to 3 L per 1 kg of said composition.

3. Composition according to Claim 1 or 2, **characterized in that** said absorbent agent has an absorption capacity from 1 L to 1000 L per 1 kg of said absorbent agent, and preferably from 1 L to 500 L per 1 kg of said absorbent agent.

4. Composition according to any one of the preceding claims, **characterized in that** it includes, in addition, at least one pH indicator agent selected from tropaeolin, thymol blue, bromocresol purple, bromophenol blue, Congo red, neutral red, phenolphthalein, thymolphthalein, alizarin yellow R, and their mixtures.

5. Composition according to any one of the preceding claims, **characterized in that** said neutralizing agent is present in a quantity ranging from 5% to 70%, preferably from 10% to 65%, and even more preferably from 15% to 60% by weight with respect to the total weight of the composition.

6. Composition according to any one of the preceding claims, **characterized in that** the composition includes:

(a) from 5% to 70%, preferably from 10% to 65%, and even more preferably from 15% to 60% of at least one neutralizing agent selected from calcium carbonate or monobasic sodium citrate,
(b) from 1% to 20%, preferably from 3% to 15%, and even more preferably from 5% to 10% of copolymer of the polyacrylate type, and
(c) from 5% to 90%, preferably from 10% to 80%, and even more preferably from 20% to 70% of a texturing mixture which is a mixture of silica gel and of sodium bicarbonate,
(d) from 0% to 0.1%, preferably from 0% to 0.08%, and even more preferably from 0% to 0.05% of at least one pH indicator agent,

said percentages being percentages by weight with respect to the total weight of the composition.

Figure 1

Figure 2

Figure 3

**EP 2 925 828 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *CHEMICAL ABSTRACTS,* 65996-61-4
- *CHEMICAL ABSTRACTS,* 497-19-8
- *CHEMICAL ABSTRACTS,* 845-10-3
- *CHEMICAL ABSTRACTS,* 009033-79-8
- *CHEMICAL ABSTRACTS,* 7758-80-7
- *CHEMICAL ABSTRACTS,* 125-20-2
- *CHEMICAL ABSTRACTS,* 7558-80-7